# EUROPEAN PATENT APPLICATION

(11) **EP 1 467 426 A2**
(43) Date of publication of application: **13.10.2004**
(21) Application number: 03015905.7
(22) Date of filing: 11.07.2003
(51) Int. Cl.: H01M 8/04

(54) **Fuel cell assembly with humidifier**

(30) Priority: 10.04.2003 CN 03109803
(71) Applicant: Asia Pacific Fuel Cell Technologies, Ltd., Neihu, Taipei 114 (TW)
(72) Inventor: Yang, Jefferson YS, Asia Pacific Fuel Cell Techn., Neihu, Taipei 114 (TW); Yang, Te-Chou, Asia Pacific Fuel Cell Technologies, Neihu, Taipei 114 (TW); Kao, Mike Pen-Mu, Asia Pacific Fuel Cell Techn., Neihu, Taipei 114 (TW); Hsu, Yao-Sheng, Asia Pacific Fuel Cell Technolog., Neihu, Taipei 114 (TW); Cheng, Yaw-Chung, Asia Pacific Fuel Cell Techn., Neihu, Taipei 114 (TW)
(74) Representative: Goddar, Heinz J., Dr.

(57) **Abstract**

A fuel cell assembly having a self-recycling humidifier. The fuel cell assembly includes a humidifier and a fuel cell module communicating with an external hydrogen source. The fuel cell module chemically combines hydrogen from the hydrogen source and oxygen from introduced air to produce electricity and water. The produced water is removed by an airflow. The moisture is recycled by the humidifier to humidify the introduced air.

## Description

### BACKGROUND OF THE INVENTION

### Field of the Invention

The present invention relates to a fuel cell assembly, and in particular to a fuel cell assembly with a humidifier, which can recycle the water produced by the reaction of the fuel cell.

### Description of the Related Art

Fuel cells (FC) directly convert the chemical energy of hydrogen and oxygen to electricity. Compared to conventional power generation devices, fuel cells produce less pollution and noise, and have higher energy density and energy conversion efficiency. Fuel cells provide clean energy, and can be used in portable electronic devices, transportation, military equipment, power generating systems or in aerospace, among other applications.

There are several kinds of fuel cells, such as alkaline fuel cells (AFC), phosphoric acid fuel cells (PAFC), solid oxide fuel cells (SOFC), molten carbonate fuel cells (MCFC), or proton exchange membrane fuel cells (PEFC). Different fuel cells use different operating principles, and each type of fuel cell has advantages and disadvantages. This invention improves conventional PEFCs.

Proton exchange membranes of PEFCs require liquid water to transfer hydrogen ions, or protons. However, when dry cold air is introduced into a hot reacting PEFC, an excess of liquid water in the proton exchange membrane will evaporate as the humidity of introduced air is much lower than that in the PEFC. Thus, as the PEFC becomes hotter, proton-transferring rate decreases, inhibiting the power-generating efficiency of the PEFC.

Conventional PEFCs lack a device to raise the humidity of introduced air. Hence, there is a need for a PEFC design, which addresses this problem, and improves efficiency.

### SUMMARY OF THE INVENTION

Accordingly, an object of the invention is to provide a humidifier for a PEFC to maintain, or raise, the humidity in a fuel cell unit, avoiding reduced efficiency during continuous reaction.

Another object of the invention is to provide a humidifier, which can recycle the water produced by PEFCs to raise the humidity of introduced air.

The present invention provides a fuel cell assembly having a self-recycling humidifier. The fuel cell assembly includes a humidifier and a fuel cell module communicating with an external hydrogen source. The fuel cell module chemically combines hydrogen and the oxygen from introduced air to produce electricity and water. The introduced air removes the produced water, forming a wet and hot airflow. The humidifier transfers the produced water from the second airflow to the introduced air forming the first airflow, which is pumped into the fuel cell module in a later step.

In a preferred embodiment, the humidifier includes stacked humidification units. Each humidification unit has a first plate, second plate and intermediate layer. The first plate has a first grooved surface communicating with the fuel cell module to introduce a first airflow into the fuel cell module. The second plate has a second grooved surface communicating with the fuel cell module to drain a second airflow to the atmosphere. The first grooved surface and the second grooved surface are perpendicular to each other. The second plate is stacked on the first plate with the second grooved surface facing to the first grooved surface. The intermediate layer disposed between the first and second plates separate the gases in the first and second grooved surfaces. The intermediate layer transfers the produced water from the second airflow in the second grooved surface to the introduced air in the first grooved surface, forming the first airflow.

Moreover, each intermediate layer includes a water-permeating membrane and a water-absorbent membrane attached thereon near the second plate to absorb the water in the second airflow. The water absorbed by the water-absorbent membrane is delivered to the introduced air in the first grooved surface by the water-permeating membrane.

Each first plate has a first and second hole at each end of the first grooved surface. Each second plate has third and fourth holes corresponding to the first and second holes. Air introduced from the atmosphere enters the first grooved surface from the first and third holes. The first airflow exits each humidification unit from the second and fourth holes. Moreover, each second plate has a fifth hole at one end of the second grooved surface. Each first plate has a sixth hole corresponding to the fifth hole, such that the second airflow can enter the second grooved surface from the fifth and sixth holes.

In the preferred embodiment, the fuel cell module of the invention includes a first electrode, a second electrode and a plurality of stacked fuel cell units disposed therebetween. One of each of the fuel cell units includes an anode bipolar plate, cathode bipolar plate and membrane electrode assembly. The anode bipolar plate has third grooved surface communicating with the hydrogen source to introduce hydrogen. The cathode bipolar plate has fourth grooved surface communicating with the humidifier to introduce the first airflow and remove produced water, thus forming the second airflow. The fourth grooved surface faces the third grooved surface. The membrane electrode assembly has an anode gas-diffusion layer, proton exchange membrane and cathode gas-diffusion layer sequentially disposed between the anode bipolar plate and the cathode bipolar plate to chemically combine hydrogen and oxygen, producing electricity.

Each anode bipolar plate has seventh and eighth holes at each end of the third grooved surface. Each cathode bipolar plate has ninth and tenth holes corresponding to the seventh and eighth holes, such that hydrogen from the hydrogen source enters the third grooved surface from the seventh and ninth holes; and exits the fuel cell units from the eight and tenth holes.

Moreover, each cathode bipolar plate has eleventh and twelfth holes at each end of the fourth grooved surface. Each anode bipolar plate has thirteenth and fourteenth holes corresponding to the eleventh and twelfth holes, such that the first airflow enters the fourth grooved surface from the eleventh and thirteenth holes, and the second airflow exits the fuel cell unit from the twelfth and the fourteenth holes.

In the preferred embodiment, the fuel cell assembly of the invention has a top plate with an air inlet communicating with the first and third holes of each humidification unit and a bottom plate with a hydrogen outlet communicating with the hydrogen source to recycle the hydrogen exhausted from the eighth and tenth holes. The fuel cell assembly further has a gas-guiding plate disposed between the fuel cell module and the humidifier. The gas-guiding plate sequentially establishes connections between the second and fourth hole of each humidification unit and the eleventh and thirteenth hole of each fuel cell unit, and between the fifth and sixth hole of each humidification unit and the twelfth and fourteenth of each fuel cell unit. The gas-guiding plate has a hydrogen inlet communicating with the seventh and eighth hole of each humidification unit.

In a preferred embodiment, the fuel cell assembly further includes a cooler providing refrigerant to cool the fuel cell module. Moreover, each anode bipolar plate has fifth grooved surface to introduce the refrigerant. A fifteenth hole is formed at one end of the fifth grooved surface on an anode bipolar plate. A sixteenth hole corresponding to the fifteenth hole is formed on each cathode bipolar plate, such that the refrigerant from the cooler can be introduced into the fifth grooved surface through the fifteenth and sixteenth holes.

Moreover, the fuel cell of this embodiment is an air-cooled fuel cell. The refrigerant is air, which can be guided to the atmosphere through the fifth grooved surface.

In another preferred embodiment, the fuel cell can be an air-cooled fuel cell or a water-cooled fuel cell. The refrigerant is recycled by the cooler from the fifth grooved surface of each anode bipolar plate.

A detailed description is given in the following embodiments with reference to the accompanying drawings.

### BRIEF DESCRIPTION OF THE DRAWINGS

The present invention can be more fully understood by reading the subsequent detailed description and examples with references composed to the accompanying drawings, wherein:
Fig. 1 is a schematic view of the fuel cell assembly of the invention;
Fig. 2A is a perspective view of a water-cooled fuel cell assembly in the first embodiment of the invention;
Fig. 2B is an exploded perspective view of the fuel cell in Fig. 2A;
Fig. 3A is an exploded perspective view of a humidification unit of the invention;
Fig. 3B is an air flow diagram of the humidification unit in Fig. 3A;
Fig. 4A is a top view of the first plate in Fig. 3A;
Fig. 4B is a bottom view of the first plate in Fig. 3A;
Fig. 4C is a top view of the second plate in Fig. 3A;
Fig. 4D is a bottom view of the second plate in Fig. 3A;
Fig. 5A is an exploded perspective view of a fuel cell unit of the invention;
Fig. 5B is an air flow diagram of the fuel cell unit in Fig. 3A;
Fig. 6A is a top view of the anode bipolar plate in Fig. 5A;
Fig. 6B is a bottom view of the anode bipolar plate in Fig. 5A;
Fig. 6C is a top view of the cathode bipolar plate in Fig. 5A;
Fig. 6D is a bottom view of the cathode bipolar plate in Fig. 5A;
Fig. 7 is a top view of the gas-guiding plate in Fig. 2B;
Fig. 8 is an exploded perspective view of a gas-cooled fuel cell assembly in the second embodiment of the invention and;
Fig. 9 is a bottom view of the anode bipolar plate in Fig. 8.

### DETAILED DESCRIPTION OF THE INVENTION

The fuel cell assembly of the present invention has an additional humidifier to recycle the water produced by a fuel cell module. The humidifier transfers water from a wet hot airflow exhausted from the fuel cell module to a dry cool airflow, which will be introduced into the fuel cell module. The humidity of introduced air is raised. Thus, water loss in the proton exchange membranes is reduced ensuring continued reaction in the fuel cell module.

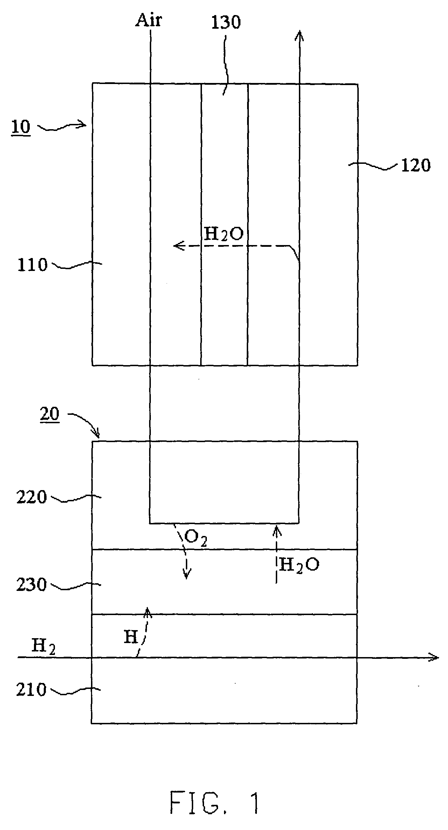

Fig. 1 is a schematic view of the fuel cell assembly of the invention. In order to simplify the drawing, the fuel cell module 20 in Fig. 1 shows only a fuel cell unit, and a humidification unit of the humidifier 10.

In Fig. 1, the fuel cell assembly includes a fuel cell module 20 and a humidifier 10. The fuel cell module 20 includes an anode bipolar plate 210, membrane electrode assembly (MEA) 230, and cathode bipolar plate 220. Hydrogen is introduced into the anode bipolar plate, and oxygen from the atmosphere, or from an oxygen source, is introduced into the cathode bipolar plate 220. The hydrogen in anode bipolar plate 210 and the oxygen in cathode bipolar plate 220 are chemically combined to produce electricity and water. The produced water is removed by air and enters the humidifier 10. The humidifier 10 includes a stacked first plate 110, intermediate layer 130 and second plate 120. The intermediate layer 130 is a water-permeating membrane, by which the moisture contained in the wet hot airflow passing through the second plate 120 is delivered to the introduced air passing through the first plate 110.

### Embodiments

### First embodiment

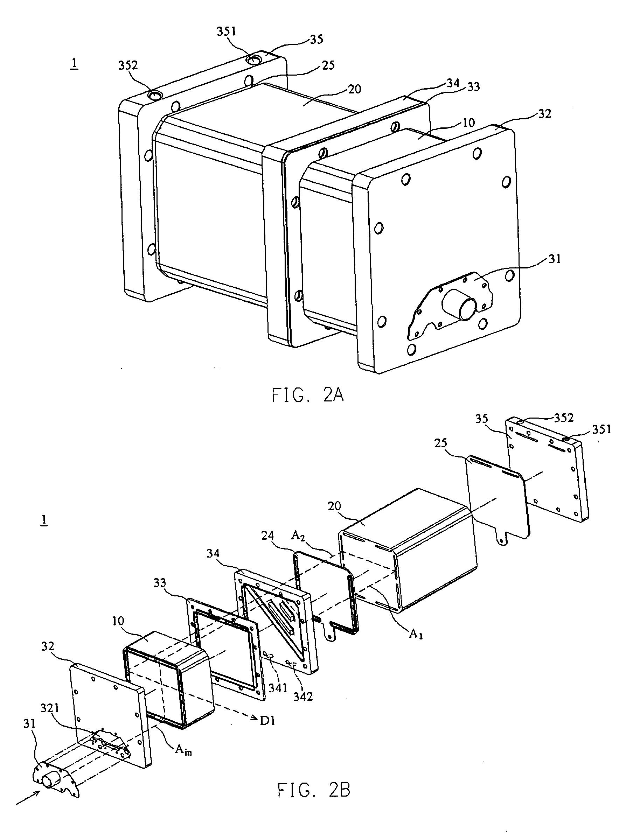

Fig. 2A is a perspective view of a water-cooled fuel cell assembly in the first embodiment of the invention, and Fig. 2B is an exploded perspective view of the fuel cell in Fig. 2B. D1 is the path of introduced air in the fuel cell assembly. In Figs 2A∼2B, the water-cooled fuel cell assembly 1 includes a top plate 32, humidifier 10, gas-guiding plate 34, first electrode 24, fuel cell module 20, second electrode 25, and bottom plate 35. Additional screws (not shown) are used to assemble the whole fuel cell assembly 1.

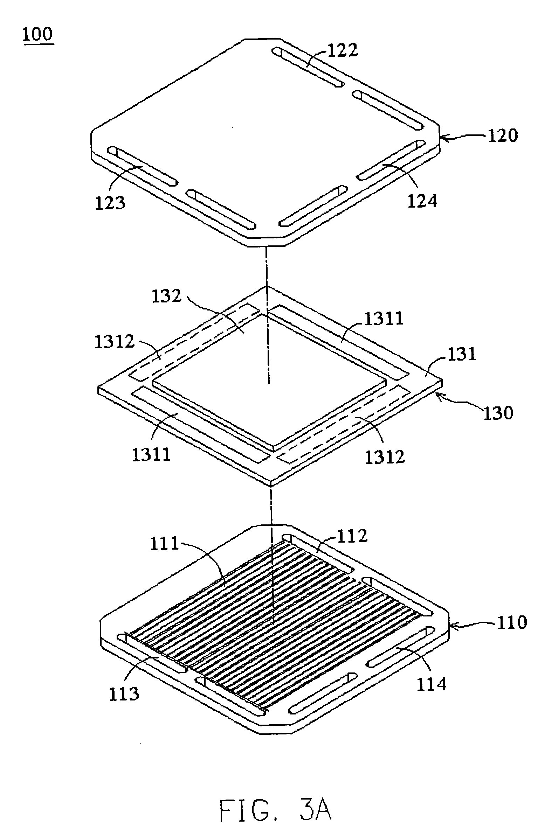

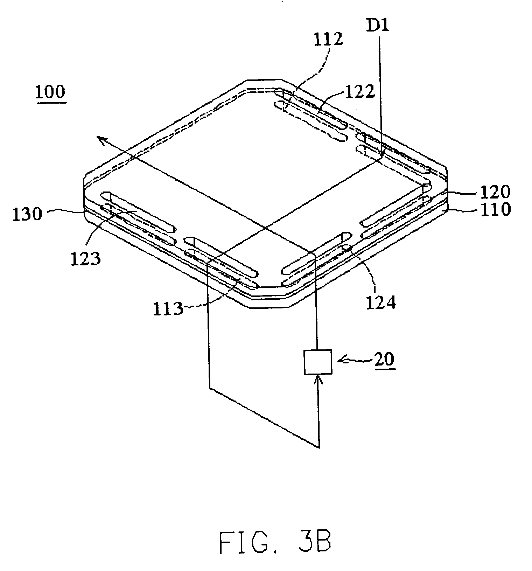

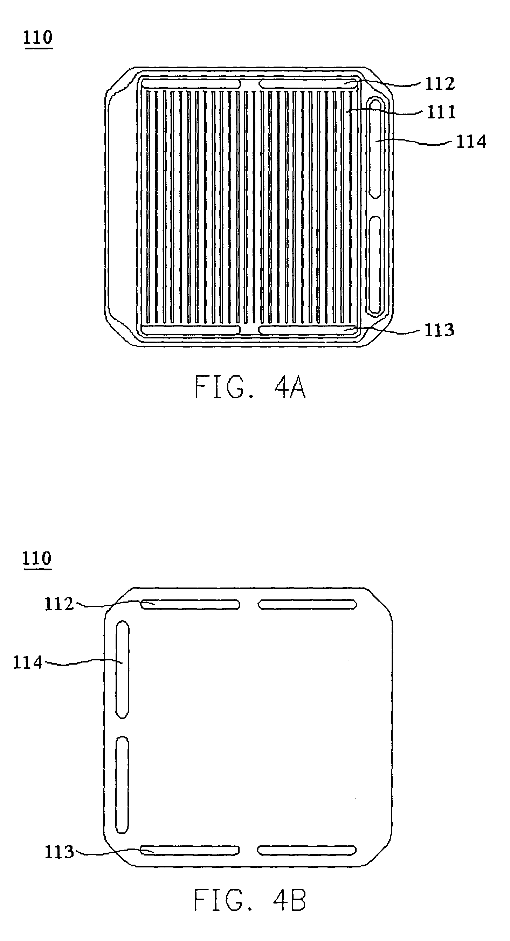

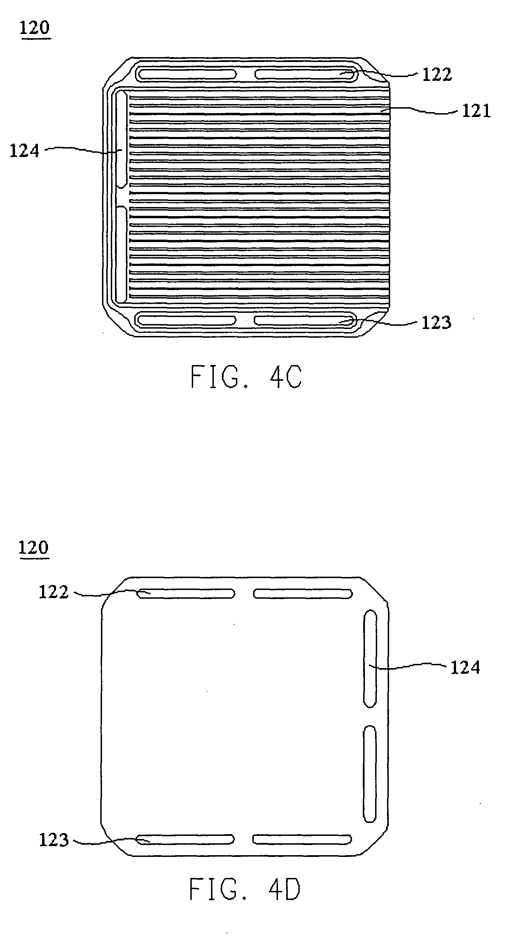

Fig. 3A is an exploded perspective view of a humidification unit of the humidifier. Fig. 3B shows the path of air of the humidification unit in Fig. 3A. Figs. 4A and 4B are the top view and bottom view of the first plate. Figs. 4C and 4D are the top view and bottom view of the second plate. In first embodiment, the humidifier 10 in Fig. 2B is formed by stacked humidification units 100 shown in Fig. 3A. The humidification units 100 include a stacked first plate 110, intermediate layer 130 and second plate 120.

According to Figs. 2B and 4A-4B, the first plate 110 has a first grooved surface 111 with a plurality of grooves thereon communicating with the fuel cell module 20. The first plate 110 also has two first holes 112, two second holes 113 and two sixth holes 114 around the first grooved surface 111. The first and second holes 112, 113 are located at each end of the first grooved surface 111.

According to Figs. 2B, 3A and 4C-4D, the second plate 120 has a second grooved surface with a plurality of grooves thereon communicating with the fuel cell module 20. The second plate 120 also has two third holes 122, two fourth holes 123 and two fifth holes 124 around the second grooved surface 121. The fifth holes 124 are located at one end of the second grooved surface 121. In Fig. 3A, the sixth holes 114 of the first plate 110 correspond to the fifth holes 124 of the second plate 120. The third and fourth holes 122, 123 of the second plate 120 correspond to the first and second holes 112, 113 of the first plate 110. Furthermore, the second plate 120 is stacked on the first plate 110 with the first grooved surface 111 facing the second grooved surface 121 and perpendicular to each other.

In Fig. 3A, the intermediate layer 130 disposed between the first and second plates 110, 120 separates the gases in the first grooved surface 111 and second grooved surface 121. The intermediate layer 130 includes a water-permeating membrane 131 and a water-absorbent membrane 132. The water-permeating membrane 131 forms a substrate of the intermediate layer 130 and is composed of water permeating and gas-separating material. Thus, the air in the first and second grooved surface 111, 121 is separated by the water-permeating membrane 131, but the moisture contained in the air in the second grooved surface 121 can pass through the water-permeating membrane 131 into the air in the first grooved surface 111.

The water-absorbent membrane 132 is attached to the water-permeating membrane 131 near the second plate 120. The water-absorbent membrane 132 is composed of hydrophilic materials to absorb the water in the air flowing through the second grooved surface 121. In Fig. 3A, the water-permeating membrane 131 has two first adhesive portions 1311 on the same surface, on which the water-absorbent membrane 132 attached and two second adhesive portions 1312 on the opposite surface. The intermediate layer 130 is adhered to the first and second plates 110, 120 by the adhesive portions. Moreover, when the humidification unit 100 is assembled, the first and second grooved surface 111, 121 are sealed by the intermediate layer 130, forming channels. The first and second adhesive portions 1311, 1312 do not obstruct the first and second grooved surface 111, 121, but prevent air from escaping.

In Figs. 3A and 3B, the air introduced from the atmosphere enters the first grooved surface 111 through the third hole 122 on the second plate 120 and the first hole 112 on the first plate 110. The introduced air then enters the fuel cell module 20 through the second and fourth holes 113, 123. Finally, the air exhausted from the fuel cell module 20 enters the-second grooved surface 121 through the fifth and sixth holes 114, 124, and is guided to the atmosphere.

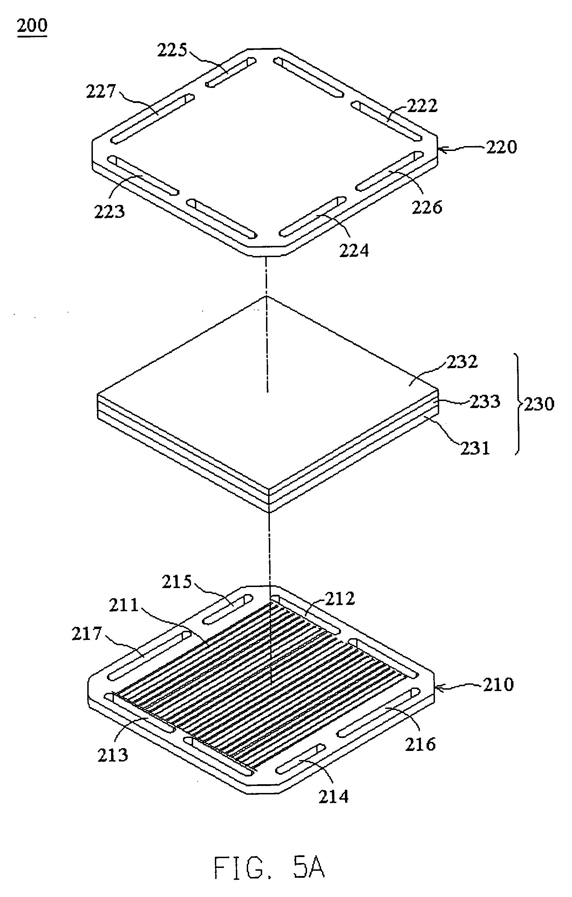

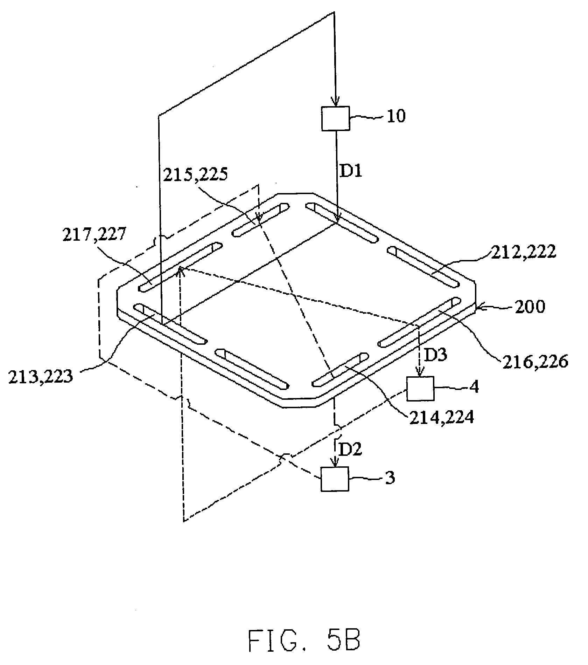

Fig. 5B is an air flow diagram of the fuel cell unit in Fig. 3A, Fig. 6A is a top view of the anode bipolar plate in Fig. 5A. In Fig. 2B, the fuel cell module of the first embodiment includes a first electrode, a second electrode and a plurality of stacked fuel cell units disposed therebetween. In Figs. 5A-5B, each fuel cell unit 200 includes an anode bipolar plate 210, cathode bipolar plate 220 and membrane electrode assembly 230. The fuel cell unit 200 of the water-cooled fuel cell 1 in the first embodiment uses hydrogen from an external hydrogen source 3 and oxygen in the wet air from the humidifier 10 to prepare the reaction. Moreover, refrigerant provided from a cooler 4 is used to cool the fuel cell module 20.

In Figs. 5A and 6A~6B, each anode bipolar plate 210 of the invention has a third grooved surface 211 on one surface and fifth grooved surface 218 on the opposite surface. The anode bipolar plate 210 also has two seventh holes 212, two eighth holes 213, a thirteenth hole 214, a fourteenth hole 215, a fifteenth hole 216 and a seventeenth hole 217 disposed around the plate near the grooved surface. The seventh and eighth holes 212, 213 are separately located at each end of the third grooved surface 211 and communicating with the third grooved surface 211. The thirteenth , fourteenth, fifteenth and seventeenth holes 214-217 are located at separate ends of the fifth grooved surface 218, but only the fifteenth and seventeenth holes 216, 217 are communicating with the fifth grooved surface 218.

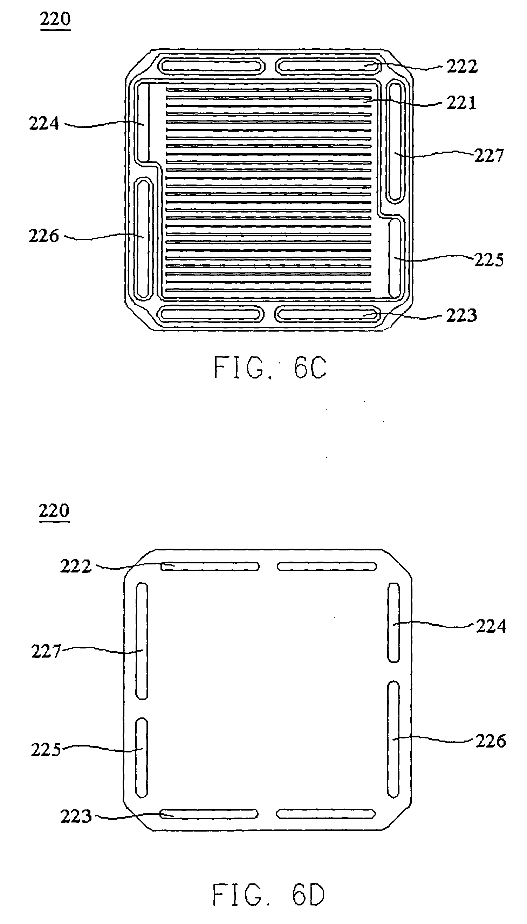

In Figs. 5A and 6C-6D, each cathode bipolar plate 220 of the invention has fourth grooved surface 221 on one surface. The cathode bipolar plate 220 also has two ninth holes 222, two tenth holes 223, an eleventh hole 224, a twelfth hole 225, a sixteenth hole 226 and an eighteenth hole 227 surrounding the plate near the grooved surface. The ninth and tenth holes 222, 223 correspond to the seventh and eighth holes 212, 213 on the anode bipolar plate 210. The eleventh , twelfth, sixteenth and eighteenth holes 224~227 are separately located at each end of the fourth grooved surface 221, and sequentially corresponding to the thirteenth, fourteenth, fifteenth and seventeenth holes 214-217 on the anode bipolar plate 210. However, only the eleventh and twelfth holes 224, 225 communicate with the fourth grooved surface 221.

In Fig. 5A, the cathode bipolar plate 220 and the MEA 230 are disposed on the anode bipolar plate 210 with the third and fourth grooved surface 211, 221 facing and perpendicular to each other. The MEA 230 is composed-of an anode gas-diffusion layer 231, proton exchange membrane 233 and cathode gas-diffusion layer 232 sequentially disposed between the anode bipolar plate 210 and the cathode bipolar plate 220 to chemically combine hydrogen and oxygen, producing electricity. The cathode bipolar plate 220, the MEA 230 and the anode bipolar plate 210 are bonded by waterproof glue to form a fuel cell unit 200 of the invention.

In Figs. 2B and 3A, the water-cooled fuel cell assembly 1 of the first embodiment has a fitting 31 and a top plate 32 with an air inlet 321 communicating with the first and third holes 112, 122 of each humidification unit 100. The fitting 31 is assembled on the top plate 32 and connected to a blower (not shown), such that the air coming from the blower can be introduced into the first and third holes 112, 122 of the humidifier 10.

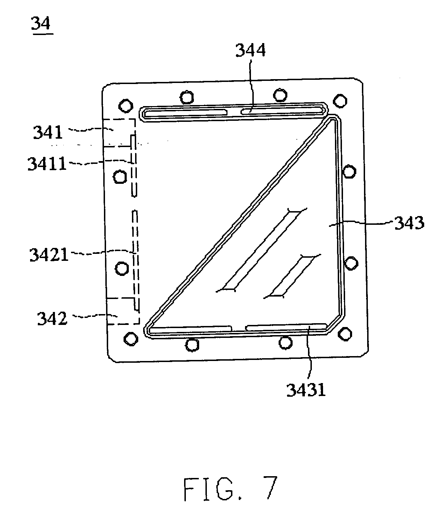

In Figs. 2B, 3A, 5A, 5B and 7, because the fuel cell module 20 and the humidifier 10 of the fuel cell assembly 1 are separately fabricated, the fuel cell module 20 of the invention has an additional gas-guiding plate 34 and cover 33 disposed between the fuel cell module 20 and the humidifier 10 to connect them and evenly spread the gas. The gas-guiding plate 34 has a triangle cavity 343 with two air-connecting holes 3431 corresponding to the seventh and ninth holes 212, 222 of each fuel cell unit 200. At the opposite side of the gas-guiding plate 34 are two air-returning holes 344 corresponding to the eighth and tenth holes 213, 223 of each fuel cell unit 200. Moreover, the gas-guiding plate 34 has a hydrogen inlet 341 and an hydrogen-connecting hole 3411, which corresponds to the eleventh and thirteen holes 224, 214 of each fuel cell unit 200, such that the hydrogen from hydrogen source 3 can be introduced into the fuel cell module 20. The gas-guiding plate 34 further has a refrigerant inlet 342 and a refrigerant-connecting hole 3421, which corresponds to the fifteenth and sixteenth holes 216, 226 of each fuel cell unit 200. Thus, the refrigerant from cooler 4 can be introduced into the fuel cell module 20. The cover 33 of the gas-guiding plate 34 has four holes corresponding to the second, fourth, fifth and sixth holes (113, 123, 124, and 114) of each humidification unit 100. Thus, the humidifier 10 communicates with the fuel cell module 20. The wet air provided by the humidifier 10 can be introduced into the fuel cell module 20, and the air with produced water from the fuel cell module 20 can return to the humidifier 10.

In Fig. 2B and 5A∼5B, the fuel cell assembly 1 of the invention has a bottom plate 35 with a hydrogen outlet 351 communicating with the hydrogen source 4 to recycle the surplus hydrogen exhausted from the fuel cell module 20 through the eighth and tenth holes 213, 223. Furthermore, because the fuel cell assembly 1 of the first embodiment is cooled by water, the cooling water must be recycled. The bottom plate 35 further provides a refrigerant outlet 352 connected to the cooler to recycle the water drained from the fuel cell module 20 through the seventeenth and eighteenth holes 217, 227.

In Fig. 2B and 5B, D2 is the flow path of hydrogen of the invention is shown. Hydrogen from the hydrogen source 3 enters the fourth grooved surface 221 through the hydrogen inlet 341, hydrogen-connecting hole 3411, the eleventh and thirteen holes 214, 224 of each cathode bipolar plate 220. Next, surplus hydrogen is recycled by the cooler 4 through the fourteenth, and twelfth holes 2145, and 225 and hydrogen outlet 351, completing the hydrogen cycle.

In Figs. 2B, 5B and 7, the fuel cell module 20 of the invention is composed by stacking a plurality of fuel cell units 200. The water, or refrigerant, from the cooler 4 is used to cool each fuel cell unit 200. Fig. 5B, D3 shows the flow path of refrigerant, or the path of cooling water in the first embodiment. The cooled water provided by the cooler 4 is introduced into the fifth grooved surface 218 of the anode bipolar plate 210 through the refrigerant inlet 342, refrigerant-connecting hole 3421, fifteenth and sixteenth holes 216, 226. Next, the cooled water returns to the cooler 4 through the seventeenth and eighteenth holes 217, 227 and the refrigerant outlet 352, completing the cooling cycle of the invention.

Figs. 2B and 3B, D1 show the air flow path of the invention. Air from the atmosphere enters the first grooved surface 111 of the first plate 110 of each humidification unit 100 through the first and third holes 112, 122, forming an introduced airflow Aᵢₙ. When the introduced airflow Aᵢₙ flows through the first grooved surface 111, the water from the second grooved surface 121 of each second plate 120 is transferred to the introduced air Aᵢₙ, forming a first humidified airflow A₁. The first airflow A₁ exits the humidifier 10 through the second and fourth holes 113, 124 and enters the fuel cell module 20. In Fig. 5B, the fuel cell module 20 is stacked by a plurality of fuel cell units 200. After passing through the gas-guiding plate 34, the first airflow A₁ enters the third grooved surface 211 of each anode bipolar plate 210. The water produced by fuel cell units 200 is removed by the first airflow A₁, forming a second airflow A₂. The second airflow A₂ exits the fuel cell units 200 through the eighth and tenth holes 213, 223. After passing through the gas-guiding plate 34, the hot, humid second airflow A₂ enters the second grooved surface 121 of each second plate 120. The water contained in the second airflow A₂ is absorbed by the water-absorbent membrane 132 of each humidification unit 100. Finally, the second airflow A₂ is exhausted from the opening of each humidification unit 100 to the atmosphere, finishing the air cycle of the invention.

Moreover, the humidity and temperature of the second airflow A₂ increases after passing through the fuel cell module 20. Thus, the introduced air Aᵢₙ passing through the first grooved surface 111 in the humidification units 100, it absorbs the water in the second airflow A₂ through the intermediate layer 130 increasing the humidity thereof. Therefore, the power-generating efficiency of the water-cooled fuel cell assembly 1 in the first embodiment is higher than that of the conventional assembly. It also overcomes the water-loss problem of a conventional MEA.

### Second embodiment

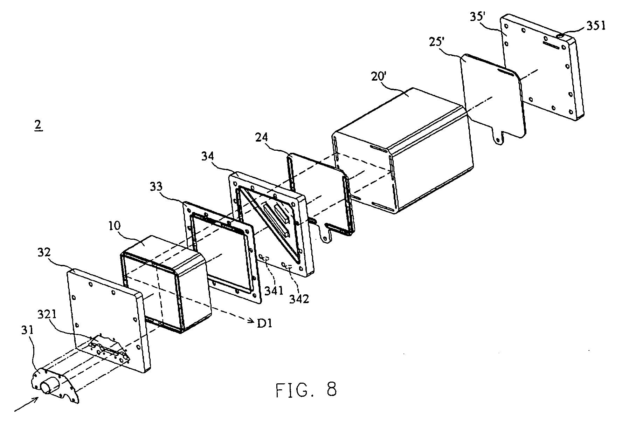

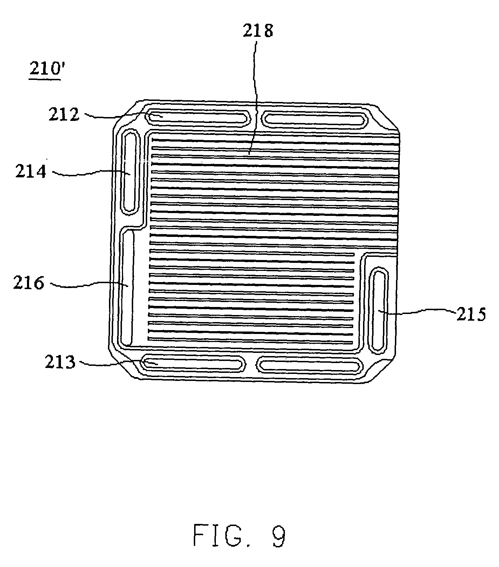

Fig. 8 is an exploded perspective view of a gas-cooled fuel cell assembly in the second embodiment of the invention, and Fig. 9 is a bottom view of the anode bipolar plate in Fig. 8. In Figs. 8 and 9, the fuel cell assembly in the second embodiment of the invention is gas-cooled. The gas-cooled fuel cell assembly 2 includes a top plate 32, humidifier 10, gas-guiding plate 34, first electrode 24, fuel cell module 20, second electrode 25', and bottom plate 35'. Additional screws (not shown) are used to assemble the entire fuel cell assembly 2. Moreover, the top plate 32, humidifier 10, gas-guiding plate 34, first electrode 24, fuel cell module 20 in the second embodiment are the same with those in the first embodiment and mark with the same numbers.

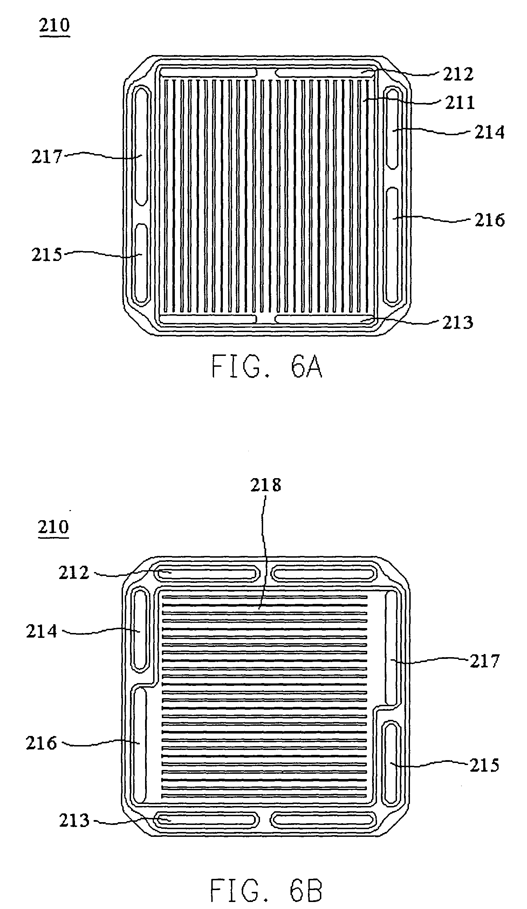

Because the refrigerant in the second embodiment is air, the exhausted air does not need to be recycled. It can be directly exhausted to the atmosphere. Thus, each anode bipolar plate 210' of the second embodiment does not have the seventeenth hole 217 in Fig. 6B, and each cathode bipolar plate 220 of the second embodiment does not have the eighteenth hole 227 in Fig. 6D. The bottom plate 35' does not have a refrigerant outlet, thus simplifying the structure of the fuel cell assembly 2 and reducing the cost of the fuel cell assembly 2.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

The features disclosed in the foregoing description, in the claims and/or in the accompanying drawings may, both separately and in any combination thereof, be material for realising the invention in diverse forms thereof.

## Claims

1. A fuel cell assembly communicating with a hydrogen source, comprising:
a fuel cell module, chemically combining hydrogen from the hydrogen source and oxygen from a first airflow to produce electricity and water, wherein the produced water is removed by the first airflow, forming a second airflow;
a humidifier, communicating with the fuel cell module and disposed thereon, wherein the humidifier transfers the produced water from the second airflow to introduced air, forming the first airflow pumped into the fuel cell module.

2. The fuel cell assembly as claimed in claim 1, wherein the humidifier comprises a plurality of stacked humidification units, each humidification unit including:
a first plate, having a plurality of first grooved surface communicating with the fuel cell module to introduce the first airflow into the fuel cell module;
a second plate, having a plurality of second grooved surface communicating with the fuel cell module to drain the second airflow to the atmosphere, wherein the second plate is stacked on the first plate with the second grooved surface facing to the first grooved surface;
a intermediate layer, disposed between the first plate and the second plate to separate the gases in the first grooved surface and the second grooved surface and transfer the produced water from the second airflow in the second grooved surface to the introduced air in the first grooved surface.

3. The fuel cell assembly as claimed in claim 2, wherein each intermediate layer comprises:
a water-permeating membrane;
a water-absorbent membrane, attached to the water-permeating membrane near the second plate to absorb the water in the second airflow.
wherein the water absorbed by the water-absorbent membrane is delivered to the introduced air in the first grooved surface by the water-permeating membrane.

4. The fuel cell assembly as claimed in claim 2, wherein the first grooved surface and the second grooved surface are perpendicular to each other.

5. The fuel cell assembly as claimed in claim 2, wherein each first plate has first and second holes at each end of the first grooved surface, each second plate has a third and fourth holes corresponding to the first and second holes, the air introduced from the atmosphere enters the first grooved surface from the first and third holes, and the first airflow exits each humidification unit from the second and fourth holes.

6. The fuel cell assembly as claimed in claim 5, further comprising a top plate with an air inlet communicating with the first and third holes of each humidification unit.

7. The fuel cell assembly as claimed in claim 5, wherein each second plate has a fifth hole at one end of the second grooved surface, each first plate has a sixth hole corresponding to the fifth hole, and the second airflow enters the second grooved surface from the fifth and sixth holes.

8. The fuel cell assembly as claimed in claim 7, wherein the fuel cell module comprises:
a first electrode;
a second electrode; and
a plurality of stacked fuel cell units, disposed between the first and second electrodes,
wherein one of each fuel cell unit comprises:
an anode bipolar plate, having a plurality of third grooved surface communicating with the hydrogen source to introduce hydrogen;
a cathode bipolar plate, having a plurality of fourth grooved surface communicating with the humidifier to introduce the first airflow and remove produced water, forming the second airflow, wherein the fourth grooved surface faces to the third grooved surface; and
a membrane electrode assembly, having an anode gas-diffusion layer, a proton exchange membrane, and a cathode gas-diffusion layer sequentially disposed between the anode bipolar plate and the cathode bipolar plate to chemically combine hydrogen and oxygen, producing electricity

9. The fuel cell assembly as claimed in claim 8, wherein each anode bipolar plate has a seventh and eighth holes at each end of the third grooved surface, each cathode bipolar plate has a ninth and tenth holes corresponding to the seventh and eighth holes, hydrogen from the hydrogen source enters the third grooved surface from the seventh and ninth holes, and exits the fuel cell units from the eight and tenth holes.

10. The fuel cell assembly as claimed in claim 9,
wherein each cathode bipolar plate has an eleventh and twelfth holes at each end of the fourth grooved surface, each anode bipolar plate has a thirteenth and fourteenth holes corresponding to the eleventh and twelfth holes, the first airflow enters the fourth grooved surface from the eleventh and thirteenth holes, and the second airflow exits the fuel cell units from the twelfth and the fourteenth holes.

11. The fuel cell assembly as claimed in claim 10, further comprising:
a gas-guiding plate, disposed between the fuel cell module and the humidifier to sequentially establish connections between the second and fourth holes of each humidification unit and the eleventh and thirteenth holes of each fuel cell unit, and between the fifth and sixth holes of each humidification unit and the twelfth and fourteenth holes of each fuel cell unit.

12. The fuel cell assembly as claimed in claim 11, wherein the gas-guiding plate has a hydrogen inlet communicating with the seventh and eighth holes of each humidification unit.

13. The fuel cell assembly as claimed in claim 12, further comprising:
a bottom plate, disposed under the fuel cell module opposite to the gas-guiding plate and having a hydrogen outlet communicating with the hydrogen source to recycle the hydrogen exhausted from the eighth and tenth holes.

14. The fuel cell assembly as claimed in claim 13, further comprising:
a cooler, providing refrigerant to cool the fuel cell module.

15. The fuel cell assembly as claimed in claim 14, wherein the anode bipolar plate has a fifth grooved surface with a plurality of grooves thereon to introduce the refrigerant.

16. The fuel cell assembly as claimed in claim 15,
wherein each anode bipolar plate has a fifteenth hole at one end of the fifth grooved surface, each cathode bipolar plate has a sixteenth hole corresponding to the fifteenth hole, the refrigerant from the cooler enters the fifth grooved surface from the fifteenth and sixteenth holes.

17. The fuel cell assembly as claimed in claim 16, wherein the refrigerant is guided to the atmosphere through the fifth grooved surface.

18. The fuel cell assembly as claimed in claim 17,
wherein the refrigerant is air.

19. The fuel cell assembly as claimed in claim 15, wherein each anode bipolar plate has a seventeenth hole at one end of the fifth grooved surface, each cathode bipolar plate has an eighteenth hole corresponding to the seventeenth hole, the refrigerant exits the fifth grooved surface from the seventeenth and eighteenth holes, recycled by the cooler.

20. The fuel cell assembly as claimed in claim 20,
wherein the refrigerant is water.

21. The fuel cell assembly as claimed in claim 20,
wherein the refrigerant is air.
